# EUROPEAN PATENT SPECIFICATION

(11) **EP 3 093 317 B1**
(45) Date of publication and mention of the grant of the patent: **04.07.2018**
(21) Application number: 16168002.0
(22) Date of filing: 03.05.2016
(51) Int. Cl.: C09D 131/04, C09D 133/08

(54) **LIQUID COMPOSITIONS FOR COATING TRANSPARENT SURFACES**
FLÜSSIGE ZUSAMMENSETZUNGEN ZUR BESCHICHTUNG VON TRANSPARENTEN OBERFLÄCHEN
COMPOSITIONS LIQUIDES DE REVÊTEMENT DE SURFACES TRANSPARENTES

(30) Priority: 11.05.2015 IT UB20150502
(43) Date of publication of application: 16.11.2016
(73) Proprietor: Colorificio Valdecia di Gelpi Claudio Gerardo, 24060 Rogno (BG) (IT)
(72) Inventor: GELPI, Claudio Gerardo, 24020 VILMINORE DI SCALVE (BG) (IT)
(74) Representative: Bianchetti Bracco Minoja S.r.l.

(56) References cited:
- EP-A1- 1 167 478
- EP-A1- 1 887 027
- EP-A2- 0 343 007
- EP-A2- 2 045 302
- WO-A2-2007/039603

## Description

### Field of the invention

The present invention relates to liquid compositions for coating transparent surfaces, in particular greenhouse glazing, comprising a pigment and a dispersing polymer and method for coating transparent surfaces comprising application of the compositions.

### Prior art

Cultivation in greenhouses requires careful regulation of temperature and irradiation conditions.

During the spring and summer months there is often a need, especially in the case of horticulture, to reduce the temperature and irradiation in order to guarantee the growth of crops requiring mild growth conditions, such as plants that ripen in autumn, or even in winter. The production of fresh vegetables can thus be guaranteed all year round, more or less independently of the seasons, due to the precise reproduction in the greenhouse of the ideal growth conditions. This system is particularly beneficial for "ready-prepared" fruit and vegetables (fresh produce ready for immediate consumption, which is cut, washed, dried and packaged in plastic bags or trays), normally available from mass-market retailers.

One method of controlling irradiation and temperature involves coating the transparent surfaces of greenhouses with a water-based paint comprising a white pigment, in particular titanium dioxide and/or calcium carbonate. Said coating must be sufficiently resistant to atmospheric agents, but must also be easily removable when reduction of irradiation is no longer required.

Examples of water-based paints suitable for said purpose are described in EP 478067, EP 533367, EP 999736 and EP 2 045 302. The choice of binder appears to be a critical factor in the properties and performance of water-based paints. EP 478067 describes a binder consisting of a styrene and maleic anhydride copolymer. EP 533367 describes as binder a copolymer consisting of acrylic or methacrylic monomers, alkenes and amphiphilic monomers. Finally, EP 999736 proposes the use as binder of a vinyl polymer characterised by a molecular weight ranging between 10,000 and 100,000 and an acid number ranging between 40 and 250. Said polymer appears to present advantages over the dispersing agents previously described, especially in terms of resistance to atmospheric agents, adhesive properties, and ease of removal.

However, the high acid value of the polymer used involves environmental and economic drawbacks because concentrated solutions of ammonia or caustic soda, which are irritants for operators, are used to prepare water-based paints.

EP 2 045 302 proposes the use as binder of a first acrylic based water-borne resin having an acid value not above 35 and a second acrylic -based water-borne resin being water soluble at a pH above 8.

There is consequently a need for water-based paint formulations which do not present the drawbacks of the prior art, are safe to use, and guarantee easy removal and a good coating performance.

### Description of the invention

It has now been found that said purposes can be achieved by using as binder a vinyl acetate and butyl acrylate copolymer substantially devoid of free acid groups, and having a high molecular weight.

The subject of the invention is therefore liquid compositions for coating transparent surfaces, in particular greenhouse glazing, comprising a pigment and a dispersing polymer characterised in that said dispersing polymer is a vinyl acetate and butyl acrylate copolymer having an acid number lower than 40 mg KOH/g and a weight-average molecular weight exceeding 100000 Daltons, determined by gel permeation chromatography,

The vinyl acetate and butyl acrylate copolymer having an acid number lower than 40 mg KOH/g and a weight-average molecular weight exceeding 100000 Daltons is known and available on the market (Crilat®, Vinavil®). The weight-average molecular weight is
determined with gel permeation chromatography (GPC). This technique can be carried out in this connection in a manner known to those skilled in the art, using, for instance, tetrahydrofuran as solvent and polystyrene as external standard.

The acid value is connected with the average number of free acid groups per chain of a polymer. The acid value can be determined by titration with potassium hydroxide, with the end point being determined potentiometrically.

The acid value then corresponds to the number of milligrams of potassium hydroxide used in the titration per gram of the polymeric binder.

The compositions according to the invention contain said dispersing copolymer in concentrations ranging between 10 and 20% by weight, preferably between 12 and 18%.

The pigments used can be those commonly employed in conventional water-based paints, such as calcium carbonate, titanium dioxide or mixtures thereof, in percentages ranging from 30 to 80% by weight.

The compositions according to the invention contain suitable dispersing agents, wetting agents, cosolvents, pH adjusters, biocides, antifoaming agents, coalescing agents, water-repellent waxes, pigment anticlumping agents and viscosity regulators.

A preferred cosolvent is polypropylene glycol.

Examples of suitable dispersing agents include phosphorus ester salts of amino-containing oligomers or polymers, phosphoric mono- or diesters with alkoxylates, monoesters or diesters of phosphoric acid with polyesters, monoesters of dicarboxylic acids with alkoxylates, polyurethane/polyamine adducts, polyalkoxylated monoamines or diamines and reaction products of unsaturated fatty acids with mono- or polyamines, aminoalcohols and unsaturated dicarboxylic acids or alcohols. Said dispersing agents, which are available, for example, from Byk-Chemie under the trade names of Dysperbyk®, are typically present in concentrations ranging between 0.5 and 2% by weight.

Non-ionic polyglycol ethers (Nuosperse ®) can be used as wetting agents.

Cellulose derivatives, in particular hydroxyethylcellulose, in percentages ranging between 0.5 and 3% by weight, can be used as viscosity regulators.

Sodium hexametaphosphate is one of the most common pigment anticlumping agents, while propylene glycol is the most common cosolvent used in the formulation of water-based paints.

pH adjusters (typically alkaline carbonates or hydroxides), biocidal agents, antifoaming agents (such as hydrophobic silica, alkoxylated compounds and emulsifiers), coalescing agents (such as 2-methyl propionic acid monoester with 2,2,4-trimethyl-1,3-pentanediol, available on the market under the brand name Agitan 100®), and the water-repellent waxes usable in the formulations according to the invention, are entirely conventional, and available on the market under various trade names. Their selection, method of use and respective quantities are common knowledge to the skilled person. Said information is also available in well-known textbooks such as Brock, Groteklaes, Mischie "European Coating Handbook", published by Ullrich Zorll, and A.R. Marrion "The Chemistry and Physics of Coatings", published by RCS.

The compositions according to the invention can be applied to various materials commonly used in greenhouses, such as glass, polyethylene, acrylic materials, polycarbonates and PVC. The invention accordingly concerns a method for coating transparent surfaces which comprises application of the compositions to said surfaces. The coating layer formed after application of the water-based paint can be removed by conventional techniques, such as simple washing with an alkaline aqueous solution. A specific advantage of the formulations according to the invention is the absence of unpleasant ammonia odours when the containers used for their packaging and distribution are opened.

Examples of compositions according to the invention are set out below.

### EXAMPLE 1

| **Composition** | **%** |
|---|---|
| | |
| Water | 20.05 |
| Hydroxyethylcellulose such as Combizell DE 6000 ® | 0.60 |
| Dispersing agent such as Disperbyk 199 ® | 1.50 |
| Wetting agent such as Nuosperse FN 265 ® | 0.20 |
| Biocide such as Germinon FBM ® | 0.25 |
| Cosolvent such as propylene glycol | 0.80 |
| Coalescing agent such as Texanol ® | 0.90 |
| Antifoaming agent such as Agitan 100 ® | 0.25 |
| pH adjuster such as NAOH (20% sol.) | 0.20 |
| Titanium white such as TR92 ® | 15 |
| Calcium carbonate such as 2AV® | 43 |
| Water-repellent wax such as Wukonil GL ® | 1.50 |
| Dispersion polymer | 15.60 |
| Antifoaming agent such as Agitan 100 | 0.15 |

### Preparation method

Disperse water and hydroxymethylcellulose at low speed for about 10 minutes. Slowly add dispersing agent, wetting agent, biocide, cosolvent, coalescing agent, antifoaming agent and pH adjuster. Add titanium white and calcium carbonate under vigorous stirring. Disperse for about twenty minutes. At average speed, insert dispersion polymer, water-repellent wax and antifoaming agent.

### EXAMPLE 2

| **Composition** | **%** |
|---|---|
| | |
| Water | 22 |
| Hydroxyethylcellulose such as Combizell DE 6000® | 0.40 |
| Wetting agent such as Nuosperse FN 265 ® | 0.20 |
| Dispersing agent such as Disperbyk 199 ® | 0.20 |
| Cosolvent such as propylene glycol | 1 |
| Sodium hexametaphosphate 20% | 0.60 |
| Calcium carbonate such as 2AV® | 58.50 |
| pH adjuster such as NAOH (20% sol.) | 0.10 |
| Dispersion polymer | 15.50 |
| Water-repellent wax such as Wukonil GL® | 1 |
| Antifoaming agent such as Agitan 100 ® | 0.20 |
| Biocide such as Germinon FBM ® | 0.30 |

### Preparation method

Disperse water and hydroxyethylcellulose at low speed for about 10 minutes. Add wetting agent, dispersing agent, cosolvent, sodium hexametaphosphate and pH adjuster to the homogenous mixture. Add calcium carbonate under vigorous stirring and disperse for about 20 minutes. At average speed, insert dispersion polymer, water-repellent wax, biocide and antifoaming agent.

## Claims

1. Liquid compositions for coating transparent surfaces comprising a pigment and a dispersing polymer, wherein said dispersing polymer is a vinyl acetate and butyl acrylate copolymer having an acid number lower than 40 mg KOH/g and a weight-average molecular weight, determined by gel permeation chromatography, exceeding 100000 Daltons.

2. Compositions as claimed in claim 1 wherein the pigment is calcium carbonate, titanium dioxide or mixtures thereof.

3. Compositions as claimed in claim 1 or 2 wherein the dispersing polymer is present in concentrations ranging between 10 and 20% by weight.

4. Compositions as claimed in one or more of claims 1 to 3 containing wetting agents, cosolvents, pH adjusters, biocides, antifoaming agents, coalescing agents, water-repellent waxes, pigment anti-clumping agents and viscosity regulators.

5. Compositions as claimed in claim 4 comprising a dispersing agent selected from phosphorus ester salts of amino-containing oligomers or polymers, phosphoric mono- or diesters with alkoxylates, monoesters or diesters of phosphoric acid with polyesters, monoesters of dicarboxylic acids with alkoxylates, polyurethane/polyamine adducts, polyalkoxylated monoamines or diamines and reaction products of unsaturated fatty acids with mono- or polyamines, aminoalcohols and unsaturated dicarboxylic acids or alcohols, non-ionic polyglycol ethers as wetting agents, propylene glycol as cosolvent, hydroxyethylcellulose as viscosity regulator, and sodium hexametaphosphate as anticlumping agent.

6. Compositions as claimed in one or more of claims 1 to 5, wherein the transparent surfaces are greenhouse glazing.

7. A method for coating transparent surfaces which comprises application of the compositions of claims 1-6.

8. A method as claimed in claim 7 wherein the transparent surfaces are greenhouse glazing.

## Patentansprüche

1. Flüssige Zusammensetzungen zum Beschichten von transparenten Oberflächen, umfassend ein Pigment und ein dispergierendes Polymer, wobei das dispergierende Polymer ein Vinylacetat- und Butylacrylat-Copolymer mit einer Säurezahl von weniger als 40 mg KOH/g und einem gewichtsmittlerem Molekulargewicht, bestimmt mittels Gelpermeationschromatographie, von mehr als 100000 Dalton ist.

2. Zusammensetzungen nach Anspruch 1, wobei das Pigment Calciumcarbonat, Titandioxid oder Mischungen davon ist.

3. Zusammensetzungen nach Anspruch 1 oder 2, wobei das dispergierende Polymer in Konzentrationen im Bereich von 10 bis 20 Gew.-% vorliegt.

4. Zusammensetzungen nach einem oder mehreren der Ansprüche 1 bis 3, enthaltend Benetzungsmittel, Cosolventien, pH-Einstellmittel, Biozide, Antischaummittel, Koaleszenzmittel, wasserabweisende Wachse, Pigment-Antiklumpmittel und Viskositätsregulatoren.

5. Zusammensetzungen nach Anspruch 4, umfassend ein Dispergiermittel, ausgewählt aus Phosphorester-Salzen von Aminogruppen-haltigen Oligomeren oder Polymeren, Phosphorsäuremono- oder -diestern mit Alkoxylaten, Monoestern oder Diestern von Phosphorsäure mit Polyestern, Monoestern von Dicarbonsäuren mit Alkoxylaten, Polyurethan-/Polyaminaddukten, polyalkoxylierten Monoaminen oder Diaminen und Reaktionsprodukten von ungesättigten Fettsäuren mit Mono- oder Polyaminen, Aminoalkoholen und ungesättigten Dicarbonsäuren oder Alkoholen, nicht-ionischen Polyglycolethern als Benetzungsmittel, Propylenglycol als Cosolvent, Hydroxyethylcellulose als Viskositätsregulator und Natriumhexametaphosphat als Antiklumpmittel.

6. Zusammensetzungen nach einem oder mehreren der Ansprüche 1 bis 5, wobei die transparenten Oberflächen Gewächshausverglasungen sind.

7. Verfahren zur Beschichtung von transparenten Oberflächen, umfassend das Auftragen der Zusammensetzungen nach einem der Ansprüche 1 bis 6

8. Verfahren nach Anspruch 7, wobei die transparenten Oberflächen eine Gewächshausverglasung sind.

## Revendications

1. Compositions liquides pour revêtir des surfaces transparentes comprenant un pigment et un polymère dispersant, dans lesquelles ledit polymère dispersant est un copolymère d'acétate de vinyle et d'acrylate de butyle ayant un indice d'acide inférieur à 40 mg de KOH/g et un poids moléculaire moyen en poids, déterminé par chromatographie par perméation de gel, dépassant 100 000 daltons.

2. Compositions selon la revendication 1, dans lesquelles le pigment est le carbonate de calcium, le dioxyde de titane ou les mélanges de ceux-ci.

3. Compositions selon la revendication 1 ou 2, dans lesquelles le polymère dispersant est présent à des concentrations comprises entre 10 et 20 % en poids.

4. Compositions selon une ou plusieurs des revendications 1 à 3 contenant des agents mouillants, des cosolvants, des agents d'ajustement du pH, des biocides, des agents antimousse, des agents de coalescence, des cires hydrofuges, des agents anti-agglutination de pigment et des régulateurs de viscosité.

5. Compositions selon la revendication 4, comprenant un agent dispersant choisi parmi les sels d'esters phosphorés d'oligomères ou de polymères contenant un groupe amino, les mono ou diesters phosphoriques avec des alcoxylates, les monoesters ou diesters d'acide phosphorique avec des polyesters, les monoesters d'acides dicarboxyliques avec des alcoxylates, les adduits de polyuréthane/polyamine, les monoamines ou diamines polyalcoxylées et les produits de réaction d'acides gras insaturés avec des mono ou polyamines, les aminoalcools et les alcools ou acides dicarboxyliques insaturés, les éthers de polyglycol non ioniques comme agents mouillants, le propylène glycol comme cosolvant, l'hydroxyéthylcellulose comme régulateur de viscosité, et l'hexamétaphosphate de sodium comme agent anti-agglutination.

6. Compositions selon une ou plusieurs des revendications 1 à 5, dans lesquelles les surfaces transparentes sont des vitrages de serre.

7. Procédé pour revêtir des surfaces transparentes, qui comprend l'application des compositions selon les revendications 1 à 6.

8. Procédé selon la revendication 7, dans lequel les surfaces transparentes sont des vitrages de serre.
